# EUROPÄISCHE PATENTSCHRIFT

(11) **EP 3 815 880 B1**
(45) Veröffentlichungstag und Bekanntmachung des Hinweises auf die Patenterteilung: **01.11.2023**
(21) Anmeldenummer: 20197123.1
(22) Anmeldetag: 21.09.2020
(51) Int. Cl.: B29C 64/135, B29C 64/25, B29C 64/268, B29C 64/30, B29C 64/364, B33Y 10/00, B33Y 30/00, B33Y 40/00, B29C 64/153

(54) **TROCKENER STRAHLWEG**
DRY BEAM PATH
TRAJET DE FAISCEAU SEC

(30) Priorität: 28.10.2019 DE 102019216570
(43) Veröffentlichungstag der Anmeldung: 05.05.2021
(73) Patentinhaber: EOS GmbH Electro Optical Systems, 82152 Krailling (DE)
(72) Erfinder: PERRET, Hans, 81543 München (DE); PATERNOSTER, Stefan, 82346 Andechs (DE)
(74) Vertreter: Prüfer & Partner mbB Patentanwälte · Rechtsanwälte

(56) Entgegenhaltungen:
- DE-A1-102018 202 644
- US-A1- 2018 025 797
- US-A1- 2018 079 029
- US-A1- 2018 186 081

## Beschreibung

Die vorliegende Erfindung bezieht sich auf eine additive Herstellvorrichtung und ein zugeordnetes additives Herstellverfahren.

Additive Herstellvorrichtungen und zugehörige Verfahren (auch als "Additive Manufacturing" bezeichnet) sind allgemein dadurch charakterisiert, dass in ihnen Objekte durch Verfestigen eines formlosen Aufbaumaterials Schicht für Schicht hergestellt werden. Die Verfestigung kann beispielsweise durch Zufuhr von Wärmeenergie zum Aufbaumaterial mittels Bestrahlens desselben mit elektromagnetischer Strahlung oder Teilchenstrahlung (z.B. Lasersintern oder Laserschmelzen oder Elektronenstrahlschmelzen) herbeigeführt werden. Beispielsweise beim Lasersintern oder Laserschmelzen wird der Auftreffbereich eines Laserstrahls auf eine Schicht des Aufbaumaterials über jene Stellen der Schicht bewegt, die dem Objektquerschnitt des herzustellenden Objekts in dieser Schicht entsprechen.

Ursprünglich für die Herstellung von Prototypen konzipiert, werden die erwähnten Vorrichtungen und Verfahren mittlerweile auch für die Fertigung größerer Stückzahlen verwendet, was eine schnelle Wartbarkeit der verwendeten Anlagen immer wichtiger macht. Gleichzeitig steigen aber auch die Anforderungen an die Präzision, also die Detailauflösung. Bei der Verwendung von Laserstrahlung zum Aufschmelzen eines pulverförmigen Aufbaumaterials bedeutet dies, dass die Anforderungen an die Optik zur Fokussierung und Führung des Laserstrahls ebenfalls beständig anwachsen.

Dokument US 2018/186081 A1 offenbart die Präambel der Ansprüche 1 und 8.

Die vorliegende Erfindung hat es sich daher zur Aufgabe gemacht, eine additive Herstellvorrichtung und ein additives Herstellverfahren bereitzustellen, mit denen die hochpräzise Serienfertigung von Bauteilen möglich wird.

Die Aufgabe wird gelöst durch ein additives Herstellverfahren nach Anspruch 1 und eine additive Herstellvorrichtung nach Anspruch 8. Weiterbildungen der Erfindung werden in den abhängigen Ansprüchen beansprucht. Insbesondere kann eine erfindungsgemäße Vorrichtung auch durch untenstehende bzw. in den abhängigen Ansprüchen ausgeführte Merkmale der erfindungsgemäßen Verfahren weitergebildet sein und umgekehrt. Ferner können die im Zusammenhang mit einer Vorrichtung beschriebenen Merkmale auch zur Weiterbildung einer anderen erfindungsgemäßen Vorrichtung benutzt werden, selbst wenn dies nicht explizit angegeben wird.

Ein erfindungsgemäßes additives Herstellverfahren zum Herstellen eines dreidimensionalen Objekts in einer additiven Herstellvorrichtung durch selektives schichtweises Verfestigen von Aufbaumaterial mittels Bestrahlens mit Laserstrahlung, wobei:
in einer Prozesskammer wiederholt eine Aufbaumaterialschicht auf eine bereits zuvor selektiv verfestigte Aufbaumaterialschicht aufgebracht wird und an Stellen mit der Laserstrahlung abgetastet wird, die dem Querschnitt des Objekts in dieser Schicht entsprechen,
die Laserstrahlung mit einer Laserlichtquelle erzeugt wird und über eine Anzahl von optischen Komponenten auf die Aufbaumaterialschicht gerichtet wird, wobei die optischen Komponenten in einem Optikraum untergebracht sind, der von einer Optikraumumhausung umhüllt wird,
ist dadurch gekennzeichnet, dass innerhalb des Optikraums eine definierte Gasatmosphäre aufrecht erhalten wird, wobei die relative Feuchte der definierten Gasatmosphäre unterhalb von 3% gehalten wird,
wobei es sich bei der Laserlichtquelle (21) um einen CO-Laser handelt.

Die vorliegende Erfindung bezieht sich auf additive Herstellvorrichtungen und - verfahren, bei denen Energie als elektromagnetische Strahlung selektiv einer Schicht des Aufbaumaterials zugeführt wird. Die Arbeitsebene (auch als Bauebene bezeichnet) ist dabei eine Ebene, in der die Oberseite der Schicht liegt, welcher die Energie zugeführt wird, in der Regel die oberste Schicht des bei der schichtweisen Herstellung entstehenden Schichtstapels. Hierbei weist die Energieeintragseinrichtung einen Laser auf. Insbesondere bezieht sich die Erfindung auf das Lasersintern oder Laserschmelzen, bei denen dem Aufbaumaterial durch Strahlung Wärme zugeführt wird, sodass dieses zumindest teilweise aufschmilzt und nach dem Abkühlen in festem, nicht mehr formlosem Zustand vorliegt, also verfestigt ist.

Es sei an dieser Stelle auch angemerkt, dass mittels einer erfindungsgemäßen additiven Herstellvorrichtung nicht nur ein Objekt, sondern auch mehrere Objekte gleichzeitig hergestellt werden können. Wenn in der vorliegenden Anmeldung von der Herstellung eines Objekts die Rede ist, dann versteht es sich, dass die jeweilige Beschreibung in gleicher Weise auch auf additive Herstellverfahren und - vorrichtungen anwendbar ist, bei denen mehrere Objekte gleichzeitig hergestellt werden.

Die optischen Komponenten, mit deren Hilfe die Laserstrahlung auf die Bauebene gerichtet wird, sind empfindlich gegenüber den bei der Herstellung entstehenden Dämpfen, Verunreinigungen oder Temperaturen. Daher sind diese optischen Komponenten, auch als Optikabschnitt bezeichnet, bevorzugt in einem von der Prozesskammer getrennten Raum, dem Optikraum, untergebracht, welcher bevorzugt hermetisch von der Prozesskammer abgetrennt ist. Grundsätzlich kann der Optikabschnitt alle optischen Komponenten zwischen dem Ausgang einer Laserquelle und dem Strahlungseintrittsfenster, durch das die Strahlung in die Prozesskammer eintritt, umfassen. Der Gedanke der Erfindung lässt sich aber bereits dann vorteilhaft anwenden, wenn nur ein Teil der optischen Komponenten von einer definierten Gasatmosphäre mit erfindungsgemäß begrenzter relativer Feuchte umgeben ist.

Für den Fall, dass bei einem additiven Herstellvorgang in einer additiven Herstellvorrichtung zwei oder mehr Laserstrahlen(bündel) zeitgleich auf die Arbeitsebene gerichtet werden, können jeweils einem Strahlengang gemeinsam zugeordnete optische Komponenten in einem eigenen Optikraum mit zugehöriger Optikraumumhausung untergebracht sein. Beispielsweise kann für jedes der Laserstrahlen(bündel) ein Optikraum vorhanden sein, der von den anderen Laserstrahlen(bündel)n zugeordneten Optikräumen so abgetrennt ist, dass in den unterschiedlichen Optikräumen unterschiedliche Gasatmosphären aufrecht erhalten werden können. Diese Anordnung kann einerseits angewendet werden, wenn die von einer Laserquelle emittierte Strahlung auf zwei oder mehr Strahlengänge aufgeteilt wird. Andererseits kann auch jedem Strahl(enbündel), das auf die Arbeitsebene gerichtet wird, eine eigene Laserquelle zugeordnet sein. Gerade in letzterem Fall ist es möglich, in den unterschiedlichen Optikräumen bewusst auch unterschiedliche Gasatmosphären aufrechtzuerhalten für den Fall, dass die unterschiedlichen Laserquellen Laserlicht unterschiedlicher Wellenlänge emittieren. Auf diese Weise kann in einem Optikraum jeweils solch eine Gasatmosphäre gewählt werden, die die Wellenlängen der zugeordneten Laserstrahlung möglichst wenig absorbiert. Insbesondere können in den unterschiedlichen Optikräumen auch unterschiedliche Werte für die Feuchte der Gasatmosphäre eingestellt werden.

Wenn eine Optikraumumhausung zur Aufrechterhaltung einer definierten Gasatmosphäre geeignet ist, dann bedeutet dies, dass innerhalb der Optikraumumhausung eine von der die additive Herstellvorrichtung umgebenden Umgebungsatmosphäre unterschiedliche Gasatmosphäre aufrechterhalten werden kann. Der Unterschied kann sich z.B. aus der Gaszusammensetzung und/oder dem Gasdruck ergeben.

Zwar ist es durchaus auch denkbar, mit einem stationären Gas im Optikraum zu arbeiten, jedoch ist es viel einfacher, eine gewünschte Gasatmosphäre im Optikraum dadurch zu schaffen, dass ein Gasstrom bzw. Gasfluss durch den Optikraum geleitet wird. Zu diesem Zweck kann die additive Herstellvorrichtung mit einem Gaseinlass und -auslass versehen sein. Bei Anschluss des Gaseinlasses an eine am Installationsort der additiven Herstellvorrichtung vorhandene Gasquelle (z.B. an einen vorhandenen Stickstoff-Gasanschluss oder ggf. an eine Gasflasche) wird infolge eines Druckunterschieds zwischen Gaseinlass und -auslass für einen Gasstrom bzw. Gasfluss durch den Optikraum gesorgt. Optional enthält die additive Herstellvorrichtung eine Gasumwälzeinrichtung, insbesondere ein Antriebsmittel zum Bewegen eines Gasvolumens, also z.B. eine Pumpe bzw. ein Gebläse.

Es sei noch erwähnt, dass bei Vorhandensein mehrerer Optikräume zum einen die additive Herstellvorrichtung mehrere Gaseinlässe und -auslässe aufweisen kann, um unterschiedlichen Optikräumen unterschiedliche Gasatmosphären bereitstellen zu können. Andererseits kann bei Vorhandensein nur eines Gaseinlasses der Gasstrom hinter dem Gaseinlass auf unterschiedliche Optikräume aufgeteilt werden, beispielsweise mittels einer Verzweigung. Hierbei muss darauf geachtet werden, dass der jeweilige Toleranzbereich für den Gas-Volumenstrom in den einzelnen Optikräumen eingehalten wird, z.B. unter Verwendung von Drosselventilen und Durchflussmessern. Die Zusammenführung der die Optikräume verlassenden Gasströme zur Zuführung an einen gemeinsamen Gasauslass kann ebenfalls z.B. mittels einer Verzweigung implementiert werden.

Für die Erzeugung der definierten Gasatmosphäre kann beispielsweise Stickstoff, Druckluft oder Argon eingesetzt werden. Insbesondere können auch Gasmischungen zum Einsatz kommen.

Die relative Feuchte der definierten Gasatmosphäre bezeichnet das prozentuale Verhältnis zwischen dem momentanen Dampfdruck des Wassers und dem Sättigungsdampfdruck desselben unter Normbedingungen, also nach DIN 1343 bei einer Temperatur von 273,15° K und einem Druck von 101,325 kPa.

Die Erfinder haben festgestellt, dass mit steigenden Anforderungen an die Präzision der hergestellten Objekte auch die Wechselwirkung der Laserstrahlung mit dem Medium, dass sie durchdringt, berücksichtigt werden muss. Insbesondere spielt diese Wechselwirkung eine Rolle, wenn die Laserstrahlung auf ihrem Weg von der Laserlichtquelle zur Bauebene ein gasförmiges Medium durchdringt. Insbesondere bei den für die Verfestigung von polymerbasiertem Aufbaumaterial verwendeten Lasern muss berücksichtigt werden, dass die Strahlung dieser Laser mit dem Wasserdampf in der Luft wechselwirkt. Erfindungsgemäß wird daher, zumindest während des additiven Herstellvorgangs innerhalb der additiven Herstellvorrichtung, also während des Richtens von Laserstrahlung auf das Aufbaumaterial, die relative Feuchte der Gasatmosphäre, die das Laserlicht durchdringt, auf einen Wert von unter 3 Prozent gesetzt.

Das Ausmaß der Beeinträchtigung der Laserstrahlung beim Durchdringen einer wasserdampfhaltigen Gasatmosphäre hängt natürlich auch von der Weglänge ab. Der genannte Maximalwert von 3% für die relative Feuchte liefert zufriedenstellende Resultate für Situationen, in denen der Weg der Laserstrahlung in der Gasatmosphäre im Optikraum 0,5 m nicht übersteigt. Für längere Wege (z.B. 1 m) kann es sein, dass nur ein Maximalwert von 2% toleriert werden kann. Ebenso kann es für noch längere Wege (z.B. 1,5 m) notwendig sein, den Maximalwert auf 1,5% zu begrenzen.

Gerade in additiven Herstellvorrichtungen, in denen ein Gaslaser zum Einsatz kommt, ist es in der Praxis schwer, geringe Weglängen zu realisieren, so dass insbesondere in diesem Anwendungsbereich die erfindungsgemäße Kontrolle der maximalen relativen Feuchte im Optikraum wichtig ist.

Andererseits ist eine umso höhere Präzision erzielbar, je geringer der zugelassene Maximalwert für die relative Feuchte ist. Es ergibt sich also insgesamt, dass die relative Feuchte der definierten Gasatmosphäre auf alle Fälle unterhalb von 3% gehalten werden sollte, bevorzugt unterhalb von 2,5 %, noch bevorzugter unterhalb von 2 %, noch weiter bevorzugt unterhalb von 1,5 %, noch weiter bevorzugt unterhalb von 1 % und am Bevorzugtesten unterhalb von 0,5 %.

Die angegebenen Werte für die Länge des Strahlwegs und die relative Feuchte gelten insbesondere für eine Wellenlänge des Laserlichts von 5,5 µm, wo das Absorptionsspektrum von Wasser ein Maximum zeigt. Für andere Wellenlängen wird die stark wellenlängenabhängige Absorption durch Wasser geringer sein, so dass eher die höheren der genannten Maximalwerte der relativen Feuchte angewendet werden können.

Zunächst kann eine Feuchtigkeitssteuerung so implementiert werden, dass im Optikraum eine Trocknungseinrichtung angeordnet wird, die so eingerichtet ist, dass sie die relative Feuchte der Gasatmosphäre auf den gewünschten Wert absenkt. Als Trocknungseinrichtung eignen sich die im Stand der Technik für diesen Zweck bekannten Vorrichtungen, z.B. ein Kondensationstrockner, ein Adsorptionstrockner, ein Peltiertrockner oder ein Granulattrockner, in dem ein Trocknungsmittel (z.B. Zeolith) zum Einsatz kommt.

Alternativ ist es möglich, bereits die relative Feuchte des dem Optikraum zur Bereitstellung der definierten Gasatmosphäre zugeführten Gases auf einen Wert unterhalb des Wertes für die Gasatmosphäre im Optikraum einzustellen. Beispielsweise kann ein Anteil eines trockenen Gases in dem dem Optikraum zugeführten Gasstrom erhöht werden.

Bevorzugt wird die relative Feuchte der definierten Gasatmosphäre innerhalb der Optikraumumhausung unterhalb von 1 % gehalten. Ein Wert der relativen Feuchte von 1 % entspricht einem Taupunkt von -37°C bzw. einem Wert für die absolute Feuchte von 0,18 g/m³ bzw. einem Wassergehalt (Anteil von Wasserdampf in der definierten Gasatmosphäre, also das Massenverhältnis von Wasserdampf und trockenem Gas, was auch als Mischungsverhältnis bezeichnet wird) von 153 ppm.

Die Absenkung der relativen Feuchte auf einen solch niedrigen Wert kann für Herstellvorgänge, bei denen es auf höchste Präzision ankommt, von besonderem Nutzen sein. Gleiches gilt für Situationen, in denen der Weg der Laserstrahlung in der Gasatmosphäre im Optikraum lang ist (z.B. 2m oder mehr). Insbesondere kann es bei manchen Anwendungen erforderlich sein, die relative Feuchte auf einen Wert von 0,5%, von 0,3 % oder sogar 0,1 % zu begrenzen.

Weiter bevorzugt wird in der Prozesskammer eine definierte Prozesskammer-Gasatmosphäre aufrecht erhalten und die relative Feuchte der Prozesskammer-Gasatmosphäre unterhalb von 3% gehalten. Die Gasatmosphäre in der Prozesskammer kann identisch mit jener in der Optikraumumhausung sein oder aber auch unterschiedlich zu dieser, z.B. im Hinblick auf die Gaszusammensetzung und/oder den Gasdruck. Wichtig ist insbesondere, dass die relative Feuchte der Gasatmosphäre in der Prozesskammer begrenzt wird, da auf diese Weise die Laserstrahlung auch auf ihrem Weg zur Bauebene nicht übermäßig absorbiert oder gestreut wird. Bevorzugt sollte dabei der zugelassene Maximalwert für die relative Feuchte der Gasatmosphäre in der Prozesskammer gleich jenem für die Gasatmosphäre im Optikraum gewählt werden. Insbesondere gilt dies dann, wenn die im Optikraum und der Prozesskammer vorhandenen Gasatmosphären nicht getrennt voneinander sind.

Weiter bevorzugt wird bei der Festlegung der nicht zu überschreitenden Werte der relativen Feuchte in Optikraum und Prozesskammer die jeweilige Länge des Strahlwegs berücksichtigt, was dann zur Festlegung unterschiedlicher Maximalwerte führen kann. Beispielsweise kann im Falle eines längeren Strahlwegs in der Prozesskammer ein niedrigerer Maximalwert der relativen Feuchte in der Prozesskammer festgelegt werden. Ferner kann in solchen Fällen die Festlegung eines höheren Maximalwerts in der Prozesskammer angezeigt sein, in denen prozessbedingt, z. B. wegen Pulverfeuchtigkeit, vermehrt Feuchtigkeit in die Prozesskammer gelangt. Alle weiter oben und im weiteren Verlauf genannten Möglichkeiten, die Feuchtigkeitssteuerung für den Optikraum auszubilden, gelten in gleicher Weise für die Prozesskammer. Gleiches gilt für die Art und Weise der Bereitstellung der definierten Gasatmosphäre in der Prozesskammer.

Die weiter oben in Zusammenhang mit dem Optikraum gemachten Bemerkungen bezüglich der Länge des Weges der Laserstrahlung durch die Gasatmosphäre gelten in gleicher Weise auch für die Prozesskammer. Auch hier verhält es sich so, dass für geringe Weglängen der Strahlung in der Prozesskammer höhere Werte der relativen Feuchte tolerierbar sind. Allerdings kann in additiven Herstellvorrichtungen die Weglänge für die Strahlung nicht beliebig klein gemacht werden, da es bauartbedingte Einschränkungen gibt. Insbesondere wenn zum Abtasten des Aufbaumaterials mit einem Laserstrahlbündel das Laserstrahlbündel mittels eines Scanners abgelenkt wird, sollte die Strahlung möglichst steil bzw. senkrecht auf das Aufbaumaterial auftreffen. Dies lässt sich bei einem abzutastenden Bereich üblicher Größe aber nur dann umsetzen, wenn der Abstand des Scanners zur Bauebene, und damit die Weglänge der Strahlung, hinreichend groß ist.

Vorteilhaft ist es, wenn anstelle der Verwendung zweier unabhängiger Systeme für die Feuchtigkeitssteuerung und die Bereitstellung der Gasatmosphäre in Optikraum und Prozesskammer eine vorhandene Feuchtigkeitssteuerungseinrichtung für den Optikraum ebenfalls für die Prozesskammer verwendet wird und zusätzlich das dem Optikraum zur Bereitstellung der Gasatmosphäre zugeführte Gas auch der Prozesskammer zugeführt wird. Letzteres kann so implementiert werden, dass über einen separaten Gaseinlass an der Prozesskammer (insbesondere in deren Wandung) der Prozesskammer ein Gas der gleichen Zusammensetzung wie jenes, das dem Optikraum zugeführt wird, zugeführt wird. Mit anderen Worten wird der Prozesskammer eine Gasmischung mit den gleichen Reingasanteilen zugeführt. Optional kann auf einen separaten Gaseinlass an der Prozesskammer verzichtet werden und stattdessen eine gasdurchlässige Verbindung (also ein Durchlass bzw. ein Rohr) in einer Kommunwand zwischen Optikraum und Prozesskammer vorgesehen werden.

Weiter bevorzugt wird die Laserstrahlung ab dem Ausgang der Laserlichtquelle entlang ihres gesamten Strahlwegs außerhalb von optischen Komponenten bis zu einem Strahleintrittsfenster, durch das die Strahlung in die Prozesskammer eintritt, innerhalb der definierten Gasatmosphäre geführt. Damit kann eine Beeinträchtigung der Laserstrahlung durch eine wasserdampfhaltige Gasatmosphäre in noch größerem Umfang vermieden werden.

Weiter bevorzugt wird die relative Feuchte der definierten Gasatmosphäre geregelt indem mindestens ein die relative Feuchte der definierten Gasatmosphäre charakterisierender Messwert, der von mindestens einem im Optikraum angeordneten Feuchtigkeitssensor ausgegeben wird, für die Regelung der relativen Feuchte der definierten Gasatmosphäre verwendet wird. Durch die Verwendung eines Feuchtigkeitssensors kann die tatsächliche relative Feuchte in der Gasatmosphäre überprüft werden. Da es abhängig von den Eigenschaften der Gasströmung innerhalb des vom Gas durchströmten Raums zu Schwankungen der Gaszusammensetzung kommen kann, ist es von Vorteil, mehrere Feuchtigkeitssensoren an unterschiedlichen Stellen innerhalb des durchströmten Raums anzuordnen.

Gerade wenn durch Zugriff auf die von dem zumindest einen Feuchtigkeitssensor ausgegebenen, die relative Feuchte der Gasatmosphäre charakterisierenden Messwerte eine Rückkopplung verwendet wird, kann die relative Feuchte auf besonders präzise Weise eingestellt, d.h. geregelt werden. Bei einer Mehrzahl von Feuchtigkeitssensoren gibt es dabei verschiedene Möglichkeiten, bei der Regelung vorzugehen. Beispielsweise kann das arithmetische Mittel der ausgegebenen Messwerte der Sensoren der Regelung zugrunde gelegt werden oder aber die Regelung orientiert sich an dem Maximalwert der von der Mehrzahl an Feuchtigkeitssensoren ausgegebenen Messwerte. Weiterhin ist es auch möglich, dass die Messwerte mit Wichtungsfaktoren belegt werden, die abhängig von der Position des jeweiligen Feuchtigkeitssensors gewählt werden.

Sofern eine Mehrzahl von Optikräumen vorhanden ist, bietet sich es an, jeden der Optikräume mit mindestens einem Feuchtigkeitssensor zu versehen. Die relative Feuchte in den einzelnen Optikräumen kann dann basierend auf den für einen Optikraum ausgegebenen Sensorwerten individuell eingestellt werden. Sofern die Optikräume mit einem gemeinsamen Gaseinlass verbunden sind, kann zwischen dem Gaseinlass und jedem der Optikräume jeweils eine Gasdurchfluss-Regelungsvorrichtung vorhanden sein und/oder eine Einrichtung, die den Anteil eines trockenen Gases in dem dem Optikraum zugeführten Gasstrom erhöht.

Weiter bevorzugt wird die definierte Gasatmosphäre im Optikraum durch Zuführen eines Gases mit einem Volumenstrom, der größer oder gleich 2 l/min ist und/oder kleiner oder gleich 15 l/min ist, bevorzugt kleiner oder gleich 10 l/min, aufrechterhalten. Der zugeführte Gasstrom wird bevorzugt so gewählt, dass im Optikraum und ggf. der Prozesskammer ein Überdruck gegenüber der Umgebungsatmosphäre herrscht, bevorzugt eine Druckdifferenz von mindestens 50 Pa gegenüber der Umgebungsatmosphäre. Auf diese Weise kann besonders effektiv eine Verunreinigung mit Wasserdampf aus der Umgebungsatmosphäre verhindert werden.

Weiter bevorzugt wird die definierte Gasatmosphäre im Optikraum durch Fluten des Optikraums mit einem Volumenstrom, der größer als 50 l/min ist, bevorzugt größer als 80 l/min, und/oder kleiner als 120 l/min, bevorzugt kleiner als 150 l/min, herbeigeführt. Durch das Fluten des Optikraums kann der Optikraum nach einer Wartung rasch wieder mit dem während des Betriebs der additiven Herstellvorrichtung verwendeten Gas befüllt werden, um möglichst wenig Zeit zu verlieren und rasch einen Herstellvorgang fortsetzen bzw. neu beginnen zu können. Gerade bei der Serienfertigung ist dies von Wichtigkeit.

Weiter bevorzugt wird als Aufbaumaterial ein kunststoffbasiertes Pulver verwendet. Bevorzugt handelt es sich beim dem als Aufbaumaterial verwendeten Pulver um ein kunststoffbasiertes (polymerbasiertes) Pulver oder Gel, das durch einen Anteil von mindestens 50 Gewichtsprozent eines Polymers charakterisiert ist. Als Polymere kommen hier insbesondere Polyaryletherketone, Polyarylethersulfane, Polyamide, Polyester, Polyether, Polyolefine, Polystyrole, Polyphenylensulfide, Polyvinylidenfluoride, Polyphenylenoxide, Polyimide deren Copolymere und Blends, die mindestens eines der vorangehenden Polymere einschließen, wobei die Auswahl jedoch nicht auf die oben genannten Polymere und Copolymere beschränkt ist, in Frage. Besonders geeignete Polyaryletherketone können aus der Gruppe Polyetheretherketon (PEEK), Polyetherketoneketon (PEKK), Polyetherketon (PEK), Polyetheretherketoneketon (PEEKK) und Polyetherketoneetherketoneketon (PEKEKK) und Polyetheretheretherketon (PEEEK) sowie deren Copolymere insbesondere mit Polyorylethersulfonen sowie deren Blends ausgewählt werden, welche mindestens eines der zuvorgenannten Polymere beinhalten. Besonders geeignete Polyamid-Polymere oder Copolymere und deren Blends können aus der Gruppe ausgewählt werden, die aus Polamid 6/6T, Polyamidelastomeren wie Polyetherblockamide wie z.B. PEBAX-basierte Materialien, Polyamid 6, Polyamid 66, Polyamid 11, Polyamid 12, Polyamid 612, Polyamid 610, Polyamid 1010, Polyamid 1212, Polyamid PA6T/66, PA4T/46 und Copolymeren besteht, die mindestens eines der vorgenannten Polymere einschließen. Geeignete Polyesterpolymere oder Copolymere können aus der aus Polyalkylenterephthalaten (z.B. PET, PBT) und deren Copolymeren ausgewählt werden. Geeignete Polyolefinpolymere oder Copolymere können aus der aus Polyethylen und Polypropylen bestehenden Gruppe ausgewählt werden. Geeignete Polystyrolpolymere oder Copolymere können aus der aus syndiotaktischen und isotaktischen Polystyrolen bestehenden Gruppe ausgewählt werden. Des Weiteren können Polymer-Kompositpulver verwendet werden, welche Füllstoffe und/oder Additive neben dem entsprechenden Polymer, Copolymer oder Blend enthalten. Zu solchen Füllstoffen zählen beispielsweise Fasern wie z.B. Kohle- oder Glasfasern und Carbon-Nanotubes, Füllstoffe mit einem geringen Aspektverhältnis wie z.B. Glaskugeln oder Alugries, mineralische Füllstoffe wie z.B. Titandioxid. Zu den Additiven zählen u.a. Prozesshilfsmittel wie z.B. Rieselhilfsmittel der Aerosil-Serie (z.B. Aerosil 200), funktionelle Additive wie Hitzestabilisatoren, Oxidationsstabilisatoren, Farbpigmente (z.B. Graphit und Ruß) und Flammschutzmittel (z.B. Organophosphate, polybromierte Kohlenwasserstoffe).

Eine erfindungsgemäße additive Herstellvorrichtung zum Herstellen eines dreidimensionalen Objekts durch selektives schichtweises Verfestigen von Aufbaumaterial mittels Bestrahlens mit Laserstrahlung mit:
einer Prozesskammer, in der wiederholt eine Aufbaumaterialschicht auf eine bereits zuvor selektiv verfestigte Aufbaumaterialschicht aufgebracht werden kann und an Stellen mit der Laserstrahlung abgetastet werden kann, die dem Querschnitt des Objekts in dieser Schicht entsprechen,
einer Laserlichtquelle zum Erzeugen der Laserstrahlung,
einer Anzahl von optischen Komponenten zum Richten der Laserstrahlung auf die Aufbaumaterialschicht, wobei die Anzahl der optischen Komponenten in einem Optikraum angeordnet ist, der von einer Optikraumumhausung umhüllt wird, die zur Aufrechterhaltung einer definierten Gasatmosphäre im Optikraum geeignet ist,
ist gekennzeichnet durch eine Feuchtigkeitssteuerungseinrichtung, die die relative Feuchte der definierten Gasatmosphäre innerhalb der Optikraumumhausung im Betrieb der additiven Herstellvorrichtung unterhalb von 3% hält
wobei es sich bei der Laserlichtquelle (21) um einen CO-Laser handelt.

Das Ausmaß der Beeinträchtigung der Laserstrahlung beim Durchdringen einer wasserdampfhaltigen Gasatmosphäre hängt natürlich auch von der Weglänge ab. Der genannte Maximalwert von 3% für die relative Feuchte liefert zufriedenstellende Resultate für Situationen, in denen der Weg der Laserstrahlung in der Gasatmosphäre im Optikraum 0,5 m nicht übersteigt. Für längere Wege (z.B. 1 m) kann es sein, dass nur ein Maximalwert von 2% toleriert werden kann. Ebenso kann es für noch längere Wege (z.B. 1,5 m) notwendig sein, den Maximalwert auf 1,5% zu begrenzen.

Gerade in additiven Herstellvorrichtungen, in denen ein Gaslaser zum Einsatz kommt, ist es in der Praxis schwer, geringe Weglängen zu realisieren, so dass insbesondere in diesem Anwendungsbereich die erfindungsgemäße Kontrolle der maximalen relativen Feuchte im Optikraum wichtig ist.

Andererseits ist eine umso höhere Präzision erzielbar, je geringer der zugelassene Maximalwert für die relative Feuchte ist. Es ergibt sich also insgesamt, dass die relative Feuchte der definierten Gasatmosphäre auf alle Fälle unterhalb von 3% gehalten werden sollte, bevorzugt unterhalb von 2,5 %, noch bevorzugter unterhalb von 2 %, noch weiter bevorzugt unterhalb von 1,5 %, noch weiter bevorzugt unterhalb von 1 % und am Bevorzugtesten unterhalb von 0,5 %.

Die angegebenen Werte für die Länge des Strahlwegs und die relative Feuchte gelten insbesondere für eine Wellenlänge des Laserlichts von 5,5 µm, wo das Absorptionsspektrum von Wasser ein Maximum zeigt. Für andere Wellenlängen wird die stark wellenlängenabhängige Absorption durch Wasser geringer sein, so dass eher die höheren der genannten Maximalwerte der relativen Feuchte angewendet werden können.

Zunächst kann die Feuchtigkeitssteuerungseinrichtung so implementiert werden, dass im Optikraum eine Trocknungseinrichtung angeordnet wird, die so eingerichtet ist, dass sie die relative Feuchte der Gasatmosphäre auf den gewünschten Wert absenkt. Als Trocknungseinrichtung eignen sich die im Stand der Technik für diesen Zweck bekannten Vorrichtungen, z.B. ein Kondensationstrockner, ein Adsorptionstrockner, ein Peltiertrockner oder ein Granulattrockner, in dem ein Trocknungsmittel (z.B. Zeolith) zum Einsatz kommt. In diesem Fall befindet sich die Feuchtigkeitssteuerungseinrichtung in der additiven Herstellvorrichtung.

Alternativ ist es möglich, wenn zusätzlich oder alternativ die relative Feuchte des dem Optikraum zur Bereitstellung der definierten Gasatmosphäre zugeführten Gases auf einen Wert unterhalb von 3% eingestellt wird. Beispielsweise kann ein Anteil eines trockenen Gases in dem dem Optikraum zugeführten Gasstrom erhöht werden. In diesem Fall befindet sich die Feuchtigkeitssteuerungseinrichtung außerhalb der additiven Herstellvorrichtung.

Weiterhin kann die Feuchtigkeitssteuerungseinrichtung im Wesentlichen aus einer Regelungskomponente bestehen, die Bestandteil einer die additive Herstellvorrichtung steuernden Steuereinrichtung ist, und mit einer in der additiven Herstellvorrichtung, insbesondere in der Optikraumumhausung, angeordneten Sensorkomponente zusammenwirkt, die der Regelungskomponente einen aktuellen Wert der relativen Feuchte an mindestens einem Ort innerhalb der Optikraumumhausung übermittelt.

Durch die Feuchtigkeitssteuerung wird der Wasserdampfgehalt der Gasatmosphäre, die die Laserstrahlung durchdringt, begrenzt, so dass die Laserstrahlung mit größerer Präzision auf das Aufbaumaterial gerichtet werden kann und Leistungsverluste beim Durchdringen der Gasatmosphäre geringer sind.

Bevorzugt ist der Optikraum durch ein Strahlungseintrittsfenster von der Prozesskammer abgetrennt, das in einer Kommunwand zwischen Prozesskammer und Optikraum ausgebildet ist. Die Laserstrahlung wird durch das Strahlungseintrittsfenster, welches in der Regel an der Oberseite der Prozesskammer angebracht ist, auf die Bauebene gerichtet. Wenn Prozesskammer und Optikraumumhausung unmittelbar aneinander angrenzen, dann kann dafür gesorgt werden, dass die Laserstrahlung auf ihrem gesamten Weg bis zum Strahlungseintrittsfenster nur innerhalb der definierten Gasatmosphäre mit begrenztem Wassergehalt verläuft. Die Kommunwand mit dem Strahlungseintrittsfenster darin kann sowohl einschalig als auch mehrschalig, z.B. zweischalig mit einem Zwischenraum zwischen den Schalen, insbesondere auch zwischen den Fenstern in den einzelnen Schalen, ausgebildet sein.

Bevorzugt ist die Wandung der Prozesskammer so ausgebildet, dass in der Prozesskammer eine definierte Gasatmosphäre aufrecht erhalten werden kann, wobei die additive Herstellvorrichtung eine Prozesskammer-Feuchtigkeitssteuerungseinrichtung umfasst, die die relative Feuchte der definierten Gasatmosphäre in der Prozesskammer im Betrieb der additiven Herstellvorrichtung unterhalb von 3% hält.

Unabhängig von dem Vorhandensein einer Prozesskammer-Feuchtigkeitssteuerungseinrichtung, die die relative Feuchte der definierten Gasatmosphäre in der Prozesskammer im Betrieb der additiven Herstellvorrichtung unterhalb von 3% hält, kann der durch den oder die Optikräume geleitete Gasstrom nach Verlassen des Optikraums der Prozesskammer zugeführt werden. Dadurch kann auch innerhalb der Prozesskammer die relative Feuchte der Gasatmosphäre unterhalb von 3% oder einem noch niedrigeren Wert gehalten werden. Falls für die Bereitstellung der trockenen Gasatmosphäre im Optikraum ein Inertgas verwendet wird, kann bei dieser Vorgehensweise auch gleichzeitig für eine Inertisierung der Prozesskammer gesorgt werden.

Weiter bevorzugt ist die Laserlichtquelle außerhalb der Optikraumumhausung angeordnet und über eine Laserstrahleinhausung mit der Optikraumumhausung, vorzugsweise mittels einer hermetischen Verbindung, verbunden, wobei die Laserstrahleinhausung zur Aufrechterhaltung einer definierten Gasatmosphäre geeignet ist und so ausgebildet ist, dass Laserstrahlung von der Laserlichtquelle durch die Laserstrahleinhausung in die Optikraumumhausung geleitet werden kann. Falls die Laserlichtquelle außerhalb der Optikraumumhausung vorhanden ist, kann mittels der Laserstrahleinhausung dafür gesorgt werden, dass die Strahlung bereits unmittelbar nach Verlassen der Laserlichtquelle eine Gasatmosphäre mit begrenztem Wassergehalt durchdringt. Hierzu wird der Laserstrahleinhausung bevorzugt die gleiche Gasatmosphäre zugeführt wie dem Optikraum, insbesondere dadurch, dass beide so miteinander verbunden sind, dass Gas vom Optikraum in die Laserstrahleinhausung eintreten kann und umgekehrt, jedoch beide hermetisch miteinander verbunden sind, also so miteinander verbunden sind, dass gegenüber der Umgebung der Laserstrahleinhausung und der Optikraumumhausung Gasdichtheit herrscht. Mittels der Feuchtigkeitssteuerungseinrichtung kann dann auch in der Laserstrahleinhausung die relative Feuchte unterhalb von 1 % gehalten werden.

Weiter bevorzugt weist die additive Herstellvorrichtung einen Gasanschluss auf, der im Betrieb der additiven Herstellvorrichtung die Zufuhr von Gas in den Optikraum gestattet, wobei der Gasanschluss bevorzugt an der Laserstrahleinhausung, besonders bevorzugt nahe der Verbindungsstelle zwischen Laserstrahleinhausung und Ausgang der Laserlichtquelle, angeordnet ist.

Wenn der Gaseinlass am Ausgang der Laserlichtquelle angeordnet ist, dann kann über die Verbindung zwischen Laserstrahleinhausung und Optikraum für einen kontinuierlichen Gasstrom durch den Raum innerhalb der Laserstrahleinhausung und den Optikraum gesorgt werden, ggf. auch noch durch die Prozesskammer. Damit kann in dem gesamten von der Laserstrahlung durchdrungenen Bereich für eine relativ homogene, trockene Gasatmosphäre gesorgt werden.

Erfindungsgemäß handelt es sich bei der Laserlichtquelle um einen CO-Laser. Gerade das von einem CO-Laser emittierte Licht, dessen Wellenlängen in einem Bereich um 5,5 µm herum liegen, wird besonders stark von Wasser absorbiert bzw. gestreut. Eine Anwendung der Erfindung bietet sich daher gerade im Zusammenhang mit CO-Lasern an. Da CO-Laser geringere Wellenlängen emittieren als CO2-Laser, können bei Belichtung des Aufbaumaterials unter Zuhilfenahme eines CO-Lasers kleinere Strukturen realisiert werden. Gerade hier bietet es sich an, durch die erfindungsgemäße Bereitstellung einer trockenen Gasatmosphäre für eine erhöhte Präzision bei der Abtastung des Aufbaumaterials zu sorgen.

Weiter bevorzugt ist im Optikraum mindestens ein Feuchtigkeitssensor angeordnet. Durch die Verwendung eines Feuchtigkeitssensors, der einen den Wassergehalt bzw. die relative Feuchte der definierten Gasatmosphäre charakterisierenden Messwert ausgibt, kann die tatsächliche relative Feuchte in der Gasatmosphäre überprüft werden. Da es abhängig von den Eigenschaften der Gasströmung innerhalb des vom Gas durchströmten Raums zu Schwankungen der Gaszusammensetzung kommen kann, ist es von Vorteil, mehrere Feuchtigkeitssensoren an unterschiedlichen Stellen innerhalb des durchströmten Raums anzuordnen. Durch einen Rückgriff auf die vom Feuchtigkeitssensor ausgegebenen Messwerte der relativen Feuchte ist eine als Regelungseinrichtung ausgebildete Feuchtigkeitssteuerungseinrichtung in der Lage, die relative Feuchte im Optikraum präziser einzustellen.

Weiter bevorzugt weist die additive Herstellvorrichtung eine Flutungseinrichtung auf, welche bei Betätigung ein Einleiten von Gas in die Optikraumumhausung mit einem Volumenstrom, der größer als 50 l/min ist, bevorzugt größer als 80 l/min und/oder kleiner als 120 l/min, bevorzugt kleiner als 150 l/min ermöglicht. Eine Flutungseinrichtung ist insbesondere eine Gasquelle, die die Zufuhr von Gas mit einem hohen Volumenstrom (größer oder gleich 50 l/min) gestattet, beispielsweise ein einen hohen Differenzdruck gegenüber der Umgebungsatmosphäre aufweisendes Gasreservoir außerhalb der additiven Herstellvorrichtung, das über ein Ventil Gas mit einem entsprechenden Volumenstrom zuführen kann oder ein Gasumwälzsystem, welches die entsprechenden Volumenströme bereitstellen kann. Bevorzugt ist die Flutungseinrichtung am Gaseinlass angeordnet, noch weiter bevorzugt ist sie Bestandteil der Gaszufuhreinrichtung. Durch das Vorsehen einer Flutungseinrichtung kann ein Optikraum während manueller Justagevorgänge, bei denen wiederholt von außen auf optische Komponenten zugegriffen wird, rasch wieder mit dem während des Betriebs der additiven Herstellvorrichtung verwendeten Gas befüllt werden, um möglichst wenig Zeit zu verlieren und rasch die Strahleigenschaften nach einer Justage überprüfen zu können.

Gerade bei einem Vorhandensein von mehreren Optikräumen, die jeweils von einer Optikraumumhausung umgeben sind, muss die Flutungseinrichtung hinreichend leistungsfähig sein, um allen mit ihr verbundenen Optikräumen die erwähnten Volumenströme gleichzeitig bereitstellen zu können. Alternativ besteht auch die Möglichkeit, dass die additive Herstellvorrichtung eine Mehrzahl von Flutungseinrichtungen aufweist. Beispielsweise könnte jedem vorhandenen Optikraum eine eigene Flutungseinrichtung zugeordnet sein.

Bevorzugt ist die Leistungsfähigkeit der Flutungseinrichtung so bemessen, dass die Gasatmosphäre in einem Optikraum, bevorzugt in jedem der mit ihr verbundenen Optikräume, innerhalb von 30s wiederhergestellt werden kann, wenn dort zu Beginn des Flutungsvorgangs Umgebungsatmosphäre vorherrscht.

Weiter bevorzugt weist die Optikraumumhausung mindestens eine Zugriffsöffnung auf, insbesondere eine Wartungsöffnung, durch die eine Justierung einer optischen Komponente unter Aufrechterhaltung der definierten Gasatmosphäre im Optikraum möglich ist. Das Vorhandensein einer speziellen Gasatmosphäre im Optikraum oder ggf. der Prozesskammer führt dazu, dass bei Zugriffen auf den Bereich innerhalb des Optikraums oder der Prozesskammer eine Belüftung durchgeführt werden muss und nach Abschluss des Zugriffs wieder die spezielle Gasatmosphäre hergestellt werden muss, bevor ein Herstellvorgang fortgesetzt bzw. begonnen werden kann. Der daraus resultierende Zeitaufwand ist insbesondere bei einem Einsatz der additiven Herstellvorrichtung in der Serienfertigung von Nachteil, da der Zeitaufwand die unproduktive Standzeit der Vorrichtung vergrößert. Hier ist die Idee der vorliegenden Erfindung, in der Optikraumumhausung bzw. der Prozesskammerwand Zugriffsöffnungen vorzusehen, welche von außen einen Zugriff auf Komponenten in dem gasdurchströmten Optikraum bzw. der gasdurchströmten Prozesskammer gestatten. Insbesondere lässt sich so etwas umsetzen, wenn der Druck in der Optikraumumhausung bzw. der Prozesskammer größer ist als der Umgebungsdruck. Gerade wenn mittels der Einstellung der optischen Komponenten der Strahlengang optimiert werden soll, resultiert aus dem Vorhandensein der Wartungsöffnungen ein enormer Zeitgewinn bei der Justage. Im Allgemeinen wird es als hinreichend angesehen, wenn trotz der vorhandenen Zugriffsöffnung(en) die Parameter der definierten Gasatmosphäre (also die relative Feuchte, der Druck, die Gaszusammensetzung, etc.) sich um weniger als 10% ändern.

Weiter bevorzugt ist eine der Anzahl von optischen Komponenten eine Laserleistungsmodifikationsvorrichtung, bevorzugt ein akustooptischer oder elektrooptischer Modulator, die durch die Wartungsöffnung manuell von außerhalb der Optikraumumhausung einstellbar ist. Der akustooptische Modulator (AOM) kann zur Einstellung der Leistung im Strahl verwendet werden, insbesondere bei Verwendung eines Kohlenmonoxidlasers. Dabei wird der Laserstrahl bei entsprechender Ansteuerung im AOM gebeugt und nur die nullte Ordnung des Beugungsmusters weitergeleitet. (Die Nutzung der 1. Ordnung wäre ebenfalls möglich, obwohl dann Verluste auftreten, da nicht die gesamte Strahlung gebeugt werden kann.) Hierdurch kann die Leistung im Strahl rasch auf vernachlässigbare Werte reduziert werden, was eine schnelle Steuerung bei der Abtastung der zu verfestigenden Bereiche einer Aufbaumaterialschicht ermöglicht.

Weiter bevorzugt ist eine der Anzahl von optischen Komponenten eine Fokussiereinrichtung, die durch die Wartungsöffnung manuell von außerhalb der Optikraumumhausung einstellbar ist. Der Begriff "Fokussiereinrichtung" wird hier stellvertretend für optische Komponenten verwendet, die entweder einzeln oder in Kombination den Laserstrahl bzw. das Laserstrahlbündel umformen, also insbesondere kollimieren, aufweiten oder fokussieren.

Weiter bevorzugt ist mindestens eine Zugriffsöffnung eine Messöffnung, durch die ein Messfühler oder eine Versorgungsleitung eines im Optikraum angeordneten Messfühlers unter Aufrechterhaltung der definierten Gasatmosphäre in den Optikraum eingebracht sein kann.

Bei den Messfühlern kann es sich um Sensoren handeln, die permanent innerhalb des Optikraums und ggf. der Prozesskammer angeordnet sind, jedoch von Zeit zu Zeit zu Wartungszwecken entfernt werden müssen. Andererseits können die erwähnten Messfühler auch Sensoren sein, die nur zeitweise in den Optikraum und ggf. die Prozesskammer eingebracht werden, beispielsweise um nach dem Auftreten von Irregularitäten bestimmte Betriebsparameter zu überprüfen. Bei den Sensoren kann es sich lediglich beispielhaft um Temperatursensoren, Feuchtigkeitssensoren oder Durchflussmesser handeln.

Der Begriff "Versorgungsleitung" bezieht sich hier nicht nur auf Leitungen, die Sensoren mit Energie versorgen (z.B. Stromzuführungen), sondern ebenfalls auf Signalleitungen, die von den Sensoren zur Ausgabe von Messresultaten und/oder zum Entgegennehmen von Ansteuersignalen benötigt werden.

Weiter bevorzugt ist der Messfühler in der Lage, eine Strahlungsleistung der von der Laserlichtquelle emittierten Laserstrahlung zu messen. Die Strahlungsleistung im Laserstrahlbündel kann wertvolle Informationen über Abweichungen vom gewünschten Zustand liefern. Zur Messung derselben wird ein entsprechender Sensor in den Strahlengang eingebracht. Dies kann allerdings nur dann geschehen, wenn nicht gerade ein Abtastvorgang einer Aufbaumaterialschicht stattfindet. Daher bietet es sich an, den entsprechenden Sensor bei Bedarf von außen durch eine Messöffnung in den Optikraum zu bringen.

Weiter bevorzugt ist die Zugriffsöffnung reversibel verschließbar. Da in geöffnetem Zustand Gas durch die Zugriffsöffnung nach außen strömt, ist es vorteilhaft, die Zugriffsöffnung so auszugestalten, dass sie bei Bedarf geöffnet und nach dem Zugriff auf das Innere des Optikraums oder der Prozesskammer wieder verschlossen werden kann. Insbesondere kann ein Federmechanismus vorgesehen sein, bei dem eine Zugriffsöffnung bei Zugriffen entgegen einer Federkraft in offenem Zustand gehalten wird.

Weiter bevorzugt ist eine Abdeckung, mit der eine Zugriffsöffnung verschlossen wird, mit einer Dichtung versehen, welche die Gasdichtheit im verschlossenen Zustand gewährleistet, z.B. eine Dichtung aus elastischem Material.

Weiter bevorzugt weist die Zugriffsöffnung einen Maximaldurchmesser auf, der geringer als 12 mm ist, bevorzugt geringer als 10 mm ist und/oder einen Minimaldurchmesser, der größer als 5 mm ist, bevorzugt größer als 8 mm ist. Damit nicht zu viel Gas ausströmt, sollte ein Maximaldurchmesser der Wartungsöffnungen und/oder Messöffnungen geringer als 12 mm sein, bevorzugt geringer als 10 mm sein. Gleichzeitig sollten aber die Öffnungen auch einen Minimaldurchmesser aufweisen, damit ein Zugriff von außen auf Komponenten in dem gasdurchströmten Optikraum und/oder die gasdurchströmte Prozesskammer nicht unnötig erschwert wird bzw. die einzuführenden Messfühler nicht zu sehr in ihrem Durchmesser beschränkt sind. Ein Minimaldurchmesser der Öffnungen sollte daher größer als 5 mm sein, bevorzugt größer als 8 mm.

Bevorzugt ist die additive Herstellvorrichtung geeignet, ein dreidimensionales Objekt aus einem kunststoffbasierten Pulver als Aufbaumaterial herzustellen, wobei die von der Laserlichtquelle im bestimmungsgemäßen Betrieb emittierte Laserstrahlung geeignet ist, eine Verfestigung des kunststoffbasierten Pulvers als Aufbaumaterial zu bewirken. Mit "kunststoffbasiert" ist hier gemeint, dass der Gewichtsprozentanteil des Kunststoffs größer als 50 % ist.

Weitere Merkmale und Zweckmäßigkeiten der Erfindung ergeben sich aus der Beschreibung von Ausführungsbeispielen anhand der beigefügten Figuren.
- Fig. 1: zeigt eine schematische, teilweise im Schnitt dargestellte Ansicht einer beispielhaften additiven Herstellvorrichtung gemäß einer Ausführungsform der Erfindung,
- Fig. 2: zeigt schematisch einen Ausschnitt der additiven Herstellvorrichtung von Figur 1,
- Fig. 3: zeigt eine schematische Ansicht einer Optikraumumhausung mit einer Messöffnung zur Durchführung von Messungen im Optikraum,
- Fig. 4: zeigt eine schematische Ansicht einer Optikraumumhausung mit einer Wartungsöffnung zur Justage eines Strahlaufweiters, der Bestandteil einer Fokussiereinrichtung ist, und
- Fig. 5: zeigt eine schematische Ansicht einer Optikraumumhausung mit einer Wartungsöffnung zur Justage eines akustooptischen Modulators, welcher zur Modifikation der Leistung im Strahl eingesetzt wird.

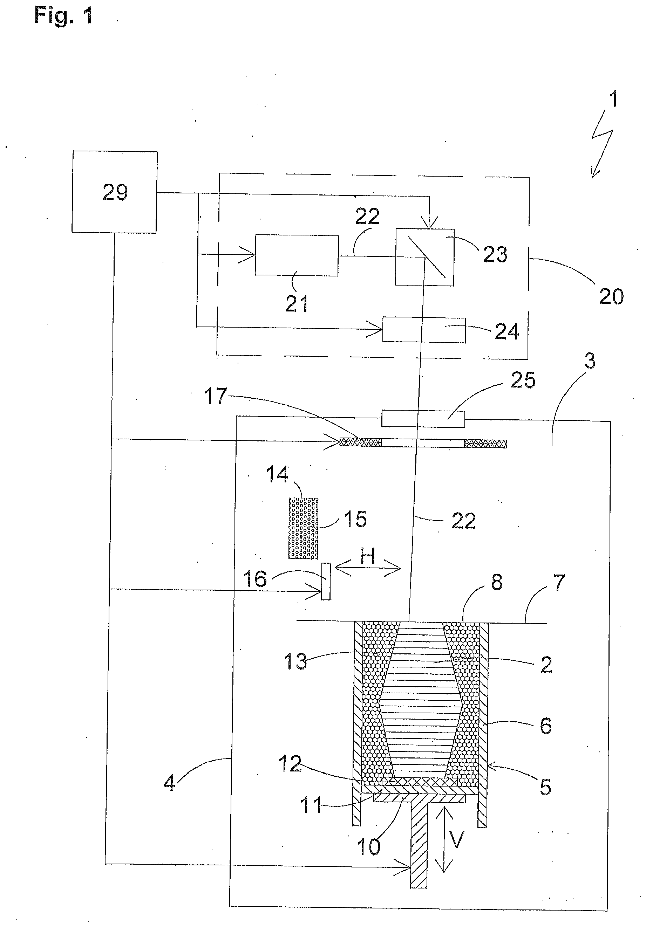

Für eine Beschreibung der Erfindung soll zunächst nachfolgend am Beispiel einer Lasersinter- oder -schmelzvorrichtung eine erfindungsgemäße additive Herstellvorrichtung unter Bezugnahme auf Fig. 1 beschrieben werden.

Zum Aufbauen eines Objekts 2 enthält die Lasersinter- oder Laserschmelzvorrichtung 1 eine Prozesskammer oder Baukammer 3 mit einer Kammerwandung 4. In der Prozesskammer 3 ist ein nach oben offener Baubehälter 5 mit einer Behälterwandung 6 angeordnet. Durch die obere Öffnung des Baubehälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Baubehälter 5 ist ein in einer vertikalen Richtung V bewegbarer Träger 10 angeordnet, an dem eine Grundplatte angebracht ist, die den Behälter 5 nach unten abschließt und damit dessen Boden bildet. Die Grundplatte kann eine getrennt von dem Träger 10 ausgebildete Platte sein, die an dem Träger 10 befestigt ist, oder sie kann integral mit dem Träger 10 ausgebildet sein. Je nach verwendetem Pulver und Prozess kann auf der Grundplatte noch eine Bauplattform 11 angebracht sein, auf der das Objekt 2 aufgebaut wird. Das Objekt 2 kann aber auch auf der Grundplatte selbst aufgebaut werden, die dann als Bauplattform dient. In Fig. 1 ist das in dem Baubehälter 5 auf der Bauplattform 11 zu bildende Objekt 2 unterhalb einer Arbeitsebene 7, die durch den oberen Rand des Behälter 5 definiert ist, in einem Zwischenzustand dargestellt mit mehreren verfestigten Schichten, umgeben von unverfestigt gebliebenem Aufbaumaterial 13.

Die Lasersinter- oder -schmelzvorrichtung 1 enthält weiterhin einen Vorratsbehälter 14 für ein Aufbaumaterial 15, in diesem Beispiel ein durch elektromagnetische Strahlung verfestigbares Pulver, und einen in einer horizontalen Richtung H bewegbaren Beschichter 16 als Materialauftragsvorrichtung zum schichtweisen Aufbringen des Aufbaumaterials 15 innerhalb des Baufelds 8. Optional kann in der Prozesskammer 3 eine Heizvorrichtung, z.B. eine Strahlungsheizung 17, angeordnet sein, die zum Beheizen des aufgebrachten Aufbaumaterials dient. Als Strahlungsheizung 17 kann beispielsweise ein Infrarotstrahler vorgesehen sein.

Die beispielhafte additive Herstellvorrichtung 1 enthält ferner eine Strahlungsbereitstellungseinheit 20 mit einer Laserquelle 21, die einen Laserstrahl 22 erzeugt, und einem Optikabschnitt mit einer Scannereinheit 23 und einer Fokussiereinrichtung 24. Der Laserstrahl 22 wird über ein Strahlungseintrittsfenster 25, das an der Oberseite der Prozesskammer 3 in deren Wandung angebracht ist, auf die Arbeitsebene 10 gerichtet. Das Strahlungseintrittsfenster weist beispielsweise eine fθ-Linse auf.

Beim Lasersintern oder Laserschmelzen kann eine Energieeintragseinrichtung beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser) oder eine Zeile der genannten Laser aufweisen. Der in Fig. 1 gezeigte spezifische Aufbau einer Lasersinter- oder -schmelzvorrichtung ist daher für die vorliegende Erfindung nur beispielhaft und kann natürlich auch abgewandelt werden. Insbesondere kann es sich bei der Laserquelle auch um einen Kohlenmonoxidlaser handeln, wie er beispielsweise von der Fa. Coherent unter der Bezeichnung "DIAMOND J-3-5 CO Laser" vertrieben wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit, geladen werden kann.

Im Betrieb wird zum Aufbringen einer Pulverschicht zunächst der Träger 10 um eine Höhe abgesenkt, die der gewünschten Schichtdicke entspricht. Durch Verfahren des Beschichters 14 über die Arbeitsebene 7 wird dann eine Schicht des pulverförmigen Aufbaumaterials 15 aufgebracht. Das Aufbringen erfolgt zumindest über den gesamten Querschnitt des herzustellenden Objekts 2 hinweg, vorzugsweise im gesamten Baufeld, also dem Bereich der Arbeitsebene 7, der innerhalb der oberen Öffnung des Behälters 5 liegt. Anschließend wird der Querschnitt des herzustellenden Objekts 2 von dem Laserstrahl 22 abgetastet, so dass das pulverförmige Aufbaumaterial an den Stellen verfestigt wird, die dem Querschnitt des herzustellenden Objekts 2 entsprechen. Diese Schritte werden solange wiederholt, bis das Objekt 2 fertiggestellt ist und der Prozesskammer 3 entnommen werden kann.

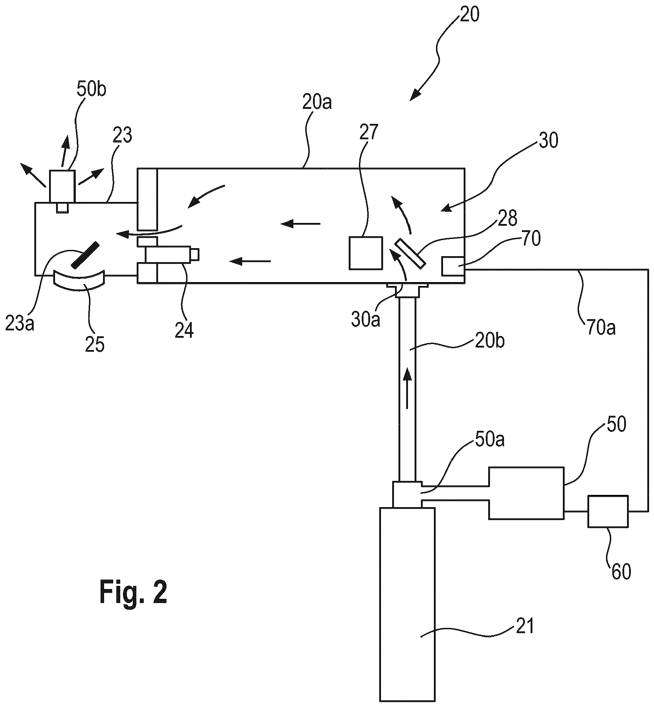

Fig. 2 zeigt schematisch ein Beispiel einer erfindungsgemäßen Ausgestaltung der Strahlungsbereitstellungseinheit 20 der additiven Herstellvorrichtung 1. Im Unterschied zu Figur 1 ist die Lage der Scannereinheit 23 und der Fokussiereinrichtung 24 im Strahlengang vertauscht. Im Einzelnen besteht der Optikabschnitt in Fig. 2 aus einer eine Fokussiereinrichtung 24 enthaltenden Strahljustierungseinheit 30 und der Scannereinheit 23. Bei eingeschaltetem Laserstrahl verläuft dieser zunächst vom Ausgang des Lasers 21 zum Eingang 30a der Strahljustierungseinheit 30. In der Strahljustierungseinheit 30 erfolgt eine Umlenkung mittels eines Umlenkspiegels 28, der den Strahl zu der Fokussiereinrichtung 24 lenkt. Von der Fokussiereinrichtung 24 trifft der Strahl dann auf lediglich schematisch dargestellte Ablenkspiegel 23a der Scannereinheit 23, um durch diese durch das Strahlungseintrittsfenster 25 auf die Oberfläche einer nicht dargestellten zu verfestigenden Aufbaumaterialschicht gerichtet zu werden.

Es sei betont, dass die geometrische Lage der optischen Komponenten auch nach Bedarf abgeändert sein kann. So kann beispielsweise auf den Umlenkspiegel 28 gänzlich verzichtet werden, indem die Komponenten so angeordnet werden, dass der Strahlverlauf zwischen Laser 21 und Fokussiereinrichtung 24 geradlinig ist. Ebenso können aber auch noch weitere Strahlumlenkkomponenten in den Strahlengang eingefügt werden, ohne vom Gedanken der Erfindung abzuweichen. Weiterhin kann die Fokussiereinrichtung 24 aus einer oder mehreren Komponenten bestehen und ohne Anspruch auf Vollständigkeit eine Strahlaufweitungseinrichtung, eine Kollimationseinrichtung und Fokussierlinsen einzeln oder in mehrfacher Ausführung enthalten. Ebenso kann die Strahljustierungseinheit 30 noch weitere optische Komponenten enthalten. In Fig. 2 ist beispielsweise eine optionale Laserleistungsmodifikationsvorrichtung 27, die im vorliegenden Beispiel ein akustooptischer Modulator (AOM) ist, gezeigt. Der AOM kann zur Einstellung der Leistung im Strahl verwendet werden, insbesondere bei Verwendung eines Kohlenmonoxidlasers.

Abschließend sei nochmals betont, dass, wo möglich, auch Komponenten im Strahlengang miteinander vertauscht werden können, beispielsweise die Scannereinheit 23 in die Strahljustierungseinheit 30 integriert werden kann und/oder die Scannereinheit 23 und die Fokussiereinrichtung 24 bezüglich ihrer Position im Strahlengang miteinander vertauscht werden können. In letzterem Fall kann auch die Fokussiereinrichtung 24 anstelle der Scannereinheit 23 aus der Strahljustierungseinheit 30 ausgegliedert werden.

Alle Komponenten des Optikabschnitts sind durch eine Optikraumumhausung umgeben, welche für eine im Wesentlichen hermetische Abschirmung der Komponenten des Optikabschnitts gegenüber der Umgebungsatmosphäre sorgt. Der Raum innerhalb der Optikraumumhausung wird im weiteren Verlauf als Optikraum bezeichnet. Im Beispiel der Figur 2 umfasst die Optikraumumhausung die Wandung der Scannereinheit 23 und die damit gasdicht verbundene Wandung 20a der Strahljustierungseinheit 30. Sie ist gasdicht mit der Laserstrahleinhausung 20b verbunden, bei welcher es sich um eine gasdichte Umhüllung des Laserstrahls 22 handelt, die gasdicht mit dem Ausgang des Lasers 21 sowie mit der Wandung 20a der Strahljustierungseinheit 30 verbunden ist.

Weiterhin erkennt man in Figur 2 eine Gaszufuhreinrichtung 50, welche dem Inneren der Optikraumumhausung einen Gasstrom zuführt. In der Fig. 2 ist der Gaseinlass 50a am Ausgang des Lasers 21 und der Gasauslass 50b in der Wandung der Scannereinheit 23. Bei der Gaszufuhreinrichtung handelt es sich um ein Antriebsmittel zum Bewegen eines Gasvolumens, also z.B. eine Pumpe bzw. ein Gebläse. In der Figur 2 ist der Weg des Gases zwischen Gaseinlass 50a und Gasauslass 50b schematisch durch Pfeile veranschaulicht. Insbesondere erkennt man eine Öffnung für den Gasstrom in der gemeinsamen Wand bzw. Kommunwand zwischen Strahljustierungseinheit 30 und Scannereinheit 23.

Die Gaszufuhreinrichtung 50 stellt als Gasdurchflussmenge durch den Optikraum einen Wert ein, der zwischen 2 l/min und 15 l/min liegt, bevorzugt größer oder gleich 5 l/min ist und/oder kleiner oder gleich 8 l/min ist. Optional kann eine (nicht gezeigte) Flutungseinrichtung vorhanden sein, mit Hilfe derer der Optikraum nach einer Wartung rasch wieder mit dem während des Betriebs der additiven Herstellvorrichtung verwendeten Gas befüllt werden kann, um möglichst wenig Zeit zu verlieren und rasch einen Herstellvorgang fortsetzen bzw. neu beginnen zu können. Bevorzugt ist die Flutungseinrichtung am Gaseinlass angeordnet, noch weiter bevorzugt ist sie Bestandteil der Gaszufuhreinrichtung. Bevorzugt ist die Flutungseinrichtung in der Lage, eine Zufuhr des Gases mit einem Volumenstrom, der größer als 50 l/min, bevorzugt größer als 80 l/min und/oder kleiner als 120 l/min, bevorzugt kleiner als 150 l/min bereit zu stellen. Die angegebenen Werte beziehen sich auf Normbedingungen, also nach DIN 1343 eine Temperatur von 273,15° K und einen Druck von 101,325 kPa.

Eine Feuchtigkeitssteuerungseinrichtung stellt die relative Feuchte des durch den Optikraum strömenden Gases so ein, dass diese möglichst niedrig, auf jeden Fall aber die relative Feuchte unterhalb von 1 %, bevorzugt unterhalb von 0,5 %, liegt. Hierzu kann beispielsweise ein Anteil an trockenem Gas, der kontinuierlich dem Gasstrom beigefügt wird, eingestellt werden, indem die Feuchtigkeitssteuerungseinrichtung eine Trockengaszufuhr-Steuerungseinrichtung 60 umfasst. Alternativ oder zusätzlich kann die Feuchtigkeitssteuerungseinrichtung eine (nicht dargestellte) Steuerungseinrichtung für die Trockenleistung eines nicht in der Figur 2 gezeigten Entfeuchters umfassen. Letzterer kann an beliebiger Stelle angeordnet sein, also am Gaseinlass 50a oder im Optikraum oder aber, außerhalb, insbesondere abseits, der additiven Herstellvorrichtung. Es sei noch bemerkt, dass die Lage der Feuchtigkeitssteuerungseinrichtung 60 in Fig. 2 nur beispielhaft ist und die Feuchtigkeitssteuerungseinrichtung 60 auch an anderer Stelle angeordnet sein kann.

Bevorzugt führt die Feuchtigkeitssteuerungseinrichtung 60 eine aktive Regelung des Feuchtigkeitsgehalts des Gases durch. Hierzu ist im Optikraum mindestens ein Feuchtigkeitssensor angeordnet. In der Figur 2 befindet sich der Feuchtigkeitssensor 70 beispielhaft in der Strahljustierungseinheit 30. In Abhängigkeit der vom Feuchtigkeitssensor 70 an die Feuchtigkeitssteuerungseinrichtung 60 über eine Verbindungsleitung 70a ausgegebenen Signale bzw. Werte regelt dann die Feuchtigkeitssteuerungseinrichtung 60 den Feuchtigkeitsgehalt auf einen gewünschten vorgegebenen Wert ein. Wenn eine Mehrzahl von Feuchtigkeitssensoren 70 im Optikraum angeordnet ist, dann kann dadurch dem Problem begegnet werden, dass infolge einer unzureichenden Durchströmung des Optikraums mit dem Gas sich an einzelnen Stellen ein höherer Feuchtigkeitsgehalt ausbildet als an anderen Stellen. Die Feuchtigkeitssteuerungseinrichtung 60 kann dann beispielsweise für die Einstellung des Feuchtigkeitsgehalts des Gases den höchsten der von den einzelnen Feuchtigkeitssensoren ausgegebenen Messwerte für die Feuchte zugrunde legen.

Auch wenn bevorzugt der Optikraum hermetisch bzw. gasdicht von den Prozesskammer 3 abgegrenzt ist, so kann in einer Abwandlung der Vorrichtung vorgesehen sein, dass der Optikraum und die Prozesskammer von dem gleichen Gas durchströmt werden, also in Optikraum und Prozesskammer eine annähernd gleiche Gasatmosphäre eingestellt wird. Insbesondere wird dann auch in der Prozesskammer 3 der Feuchtigkeitsgehalt der Gasatmosphäre durch die Feuchtigkeitssteuerungseinrichtung 60 begrenzt. Bevorzugt kann hierfür auch in der Prozesskammer 3 mindestens ein Feuchtigkeitssensor 70 angeordnet sein.

Obwohl es sich bei der Figur 2 eigentlich um eine schematische Darstellung handelt, so zeigt Fig. 2 dennoch bereits eine bevorzugte Einbaulage der Laserlichtquelle 21: Nimmt man an, dass die Vertikale in der Figur 2 (also die Vertikale des Zeichnungsblatts) identisch mit der Vertikalen in einer Einbausituation an einer additiven Herstellvorrichtung ist, so erkennt man, dass das Laserlicht die Laserlichtquelle 21 nach oben (also in einer Richtung entgegen der Schwerkraft) verlässt. Infolge der Anordnung des Gaseinlasses 50a am Ausgang der Laserlichtquelle 21 strömt auch das zugeführte Gas durch die Laserstrahleinhausung 20b in einer Richtung entgegen der Schwerkraft in die Optikraumumhausung 20a. Dies ist von Vorteil, da dadurch automatisch das Laserlichtaustrittsfenster (nicht bezeichnet) am Ausgang der Laserlichtquelle 21 frei von Verunreinigungen gehalten werden kann, die sich ansonsten darauf ablagern könnten. Es versteht sich, dass die Vorteilhaftigkeit der Lösung auch bereits dann erzielt wird, wenn das Laserlicht unter einem Winkel zu der Richtung entgegen der Schwerkraft die Laserlichtquelle verlässt, z.B. unter einem Winkel der kleiner oder gleich 45° ist, bevorzugt kleiner oder gleich 30°.

Verunreinigungen können besonders dann vom Laserlichtaustrittsfenster der Laserlichtquelle 21 ferngehalten werden, wenn das Gas am Gaseinlass 50a eine horizontale Bewegungskomponente erhält, die zu einer spiralförmigen Aufwärtsbewegung des Gasstroms innerhalb der Laserstrahleinhausung 20b führt.

Das Vorhandensein einer speziellen Gasatmosphäre im Optikraum und/oder der Prozesskammer führt dazu, dass bei Zugriffen auf den Bereich innerhalb des Optikraums oder der Prozesskammer eine Belüftung durchgeführt werden muss und nach Abschluss des Zugriffs wieder die spezielle Gasatmosphäre hergestellt werden muss, bevor ein Herstellvorgang fortgesetzt bzw. begonnen werden kann. Der daraus resultierende Zeitaufwand ist insbesondere bei einem Einsatz der additiven Herstellvorrichtung in der Serienfertigung von Nachteil, da der Zeitaufwand die unproduktive Standzeit der Vorrichtung vergrößert. Hier ist die Idee der vorliegenden Erfindung, in der Optikraumumhausung und oder der Prozesskammerwand Wartungsöffnungen vorzusehen, welche nur einen geringen Durchmesser aufweisen und von außen einen Zugriff auf Komponenten in dem gasdurchströmten Optikraum und/oder auf die gasdurchströmte Prozesskammer gestatten. Alternativ oder zusätzlich können Messöffnungen vorgesehen sein, welche nur einen geringen Durchmesser aufweisen und von außen die Einführung von Messfühlern in den gasdurchströmten Optikraum und/oder die gasdurchströmte Prozesskammer gestatten.

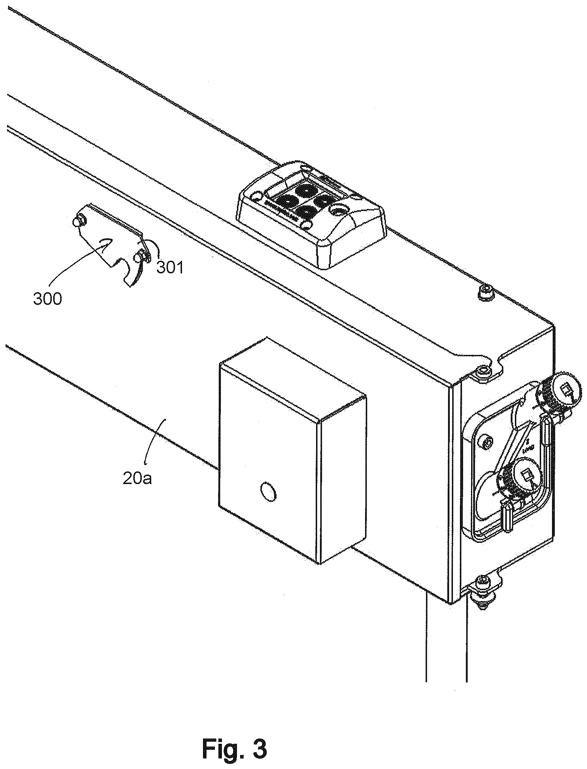

Einzelne Beispiele für erfindungsgemäße Wartungs- und Messöffnungen werden im Folgenden anhand der Figuren 3 bis 5 erläutert, wobei die Aufzählung an Beispielen nicht erschöpfend gemeint ist und es zahlreiche weitere Möglichkeiten des Einsatzes von Wartung- und Messöffnungen gibt.

Fig. 3 zeigt eine Ansicht einer Optikraumumhausung 20a, in der eine Messöffnung 300 erkennbar ist, die in der Darstellung mit einer Abdeckung 310 abgedeckt ist. Fig. 3 zeigt damit die Messöffnung 300 in einem bei Nichtgebrauch verschlossenen Zustand. Der Schließmechanismus kann dabei unter Zuhilfenahme eines nicht gezeigten Federmechanismus implementiert werden. Durch die Messöffnung 300 kann beispielsweise eine Zuführung eines in das Innere der Optikraumumhausung eingebrachten Sensors bzw. Messfühlers geführt werden, um Signale während der Messung von innerhalb des Optikraums nach außen oder von außerhalb des Optikraums nach innen zu übertragen. Insbesondere kann es sich um einen Messfühler handeln, der in der Lage ist, eine Strahlungsleistung im Laserstrahlbündel im Optikraum zu erfassen.

Generell ist es möglich, durch die Verwendung von Messöffnungen während des laufenden Betriebs der additiven Herstellvorrichtung Messfühler einzuführen, um beispielsweise zu prüfen, ob Betriebsparameter den zulässigen Wertebereich verlassen oder bei beobachteten Irregularitäten im Herstellprozess den Ursachen auf den Grund gehen zu können, ohne den Herstellprozess unterbrechen zu müssen.

Bevorzugt wird man die Messöffnungen 300 so anordnen, dass Messfühler an besonders geeignete Stellen im Innern des Optikraums bzw. der Prozesskammer 3 geführt werden können.

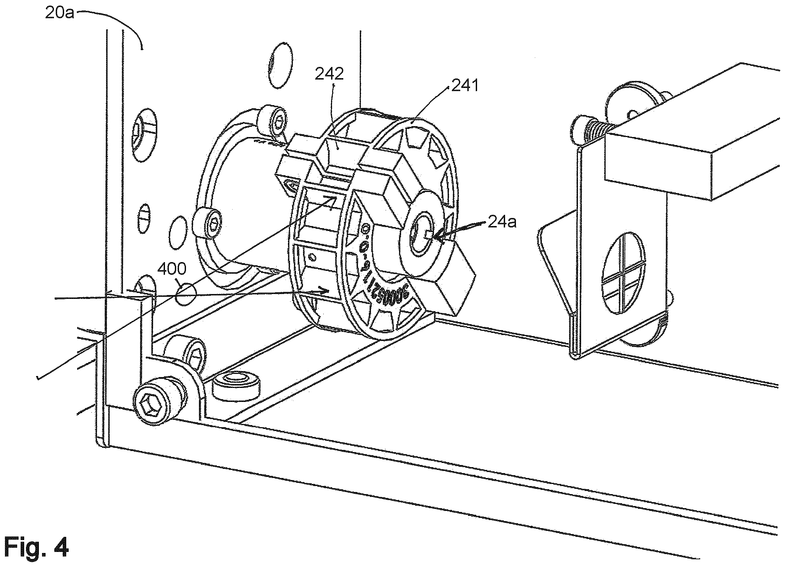

Fig. 4 zeigt eine Wartungsöffnung 400, die es gestattet, Manipulationen an einem Strahlaufweiter 24a vorzunehmen. Hierzu ist die Wartungsöffnung 400 so in der transparent dargestellten Optikraumumhausung 20a angeordnet, dass durch sie mit einem stabförmigen Instrument der Strahlaufweiter 24a erreicht werden kann. Ein Zugriff von außerhalb der Optikraumumhausung auf unterschiedliche Stellen des Strahlaufweiters 24a ist mittels zweier Pfeile veranschaulicht.

Auch auf Seiten der Einrichtung, die von außen manipuliert werden soll, in diesem Beispiel dem Strahlaufweiter 24a, können Vorkehrungen getroffen werden, die eine Manipulierbarkeit bzw. Einstellbarkeit von außerhalb der Optikraumumhausung 20a erleichtern. So weist der Strahlaufweiter in Fig. 4 eine Manschette 241 auf, die in der Figur den Strahlaufweiter ringförmig umschließt und an ihrer Außenseite Vertiefungen 242 aufweist, in die ein stabförmiges Instrument eingreifen kann und durch Ausüben von Druck auf die Seitenwände der Vertiefungen eine Bewegung, insbesondere eine Drehung eines oder mehrerer Strahlaufweiterelemente um eine Achse zur Verstellung der Strahlaufweitung veranlassen kann.

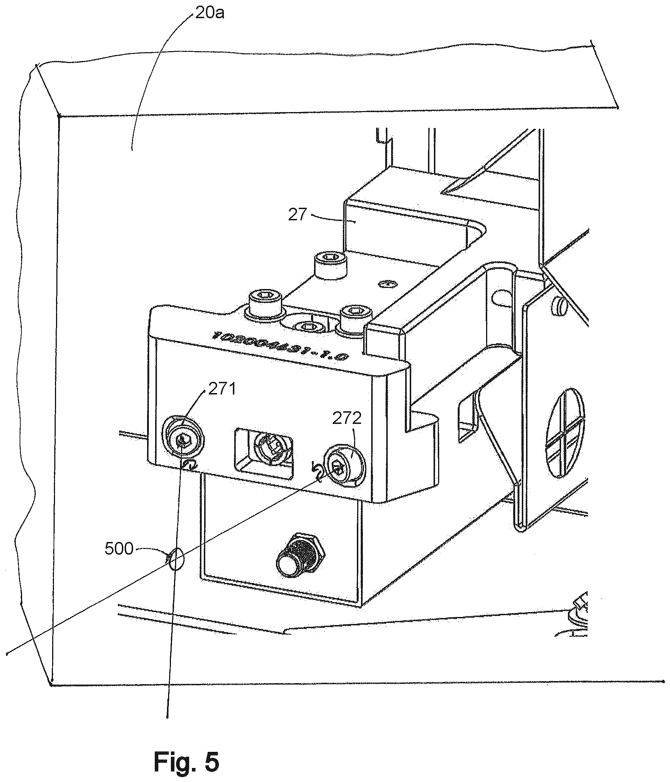

Fig. 5 zeigt einen Fall, in dem im Optikraum eine Laserleistungsmodifikationsvorrichtung 27 vorhanden ist. Wie auch für die anderen optischen Komponenten, so muss auch für die Laserleistungsmodifikationsvorrichtung 27 eine optische Justage vorgenommen werden, um den Strahlengang für eine Fokussierung der Strahlung auf die Bauebene bzw. Arbeitsebene zu optimieren. Entsprechend ist in Fig. 5 eine Wartungsöffnung 500 in der Optikraumumhausung 20a nahe den beiden Einstellelementen 271 und 272 der Laserleistungsmodifikationsvorrichtung 27 angeordnet. Damit sind beide Einstellelemente 271 und 272 durch die Wartungsöffnung 500 hindurch mit einem stabförmigen Instrument bedienbar, was in der Figur durch zwei Pfeile veranschaulicht ist. Auch wenn die Nachkorrektur des Strahlengangs nicht unmittelbar während eines Belichtungsvorgangs von Aufbaumaterial in der Prozesskammer erfolgt, bringt das Vorhandensein der Wartungsöffnung 500 dennoch Vorteile. Zur Beurteilung der Auswirkungen der Veränderungen an der Laserleistungsmodifikationsvorrichtung 27 muss die Strahlungsleistung im Laserstrahlbündel gemessen werden, was bei trockener Gasatmosphäre geschehen sollte. Zum einen erhält man dadurch genauere Messergebnisse, zum anderen erspart man sich ein "Belüften" mit nachfolgender Wiederherstellung der Gasatmosphäre für jeden Justagevorgang.

Natürlich könnte auch jedem Einstellelement eine eigene Wartungsöffnung zugeordnet sein. Generell kann man aber durch geeignete Positionierung und Ausrichtung der Einstellelemente einer optischen Komponente Wartungsöffnungen einsparen indem durch eine Wartungsöffnung verschiedene Einstellelemente, die durchaus auch verschiedenen optischen Komponenten angehören können, bedienbar sind.

In der Figur 5 handelt es sich bei den Einstellelementen 271 und 272 um Schrauben mit einem Innensechskant am Schraubenkopf. Durch Eingriff in den Innensechskant und Verdrehen der Schrauben um ihre Achse kann die Lage der Laserleistungsmodifikationsvorrichtung 27 im Strahlengang justiert werden. Es versteht sich, dass alternativ zu einem Innensechskant auch jedes andere im Stand der Technik bekannte Schraubenkopfprofil auf diese Weise von außen betätigt werden kann, beispielsweise ein Kreuzschlitz, ein Außensechskant, ein Torxprofil, etc.

## Patentansprüche

1. Additives Herstellverfahren zum Herstellen eines dreidimensionalen Objekts (2) in einer additiven Herstellvorrichtung (1) durch selektives schichtweises Verfestigen von Aufbaumaterial (13) mittels Bestrahlens mit Laserstrahlung, wobei:
in einer Prozesskammer (3) wiederholt eine Aufbaumaterialschicht auf eine bereits zuvor selektiv verfestigte Aufbaumaterialschicht aufgebracht wird und an Stellen mit der Laserstrahlung abgetastet wird, die dem Querschnitt des Objekts in dieser Schicht entsprechen,
die Laserstrahlung mit einer Laserlichtquelle (21) erzeugt wird und über eine Anzahl von optischen Komponenten auf die Aufbaumaterialschicht gerichtet wird, wobei die optischen Komponenten in einem Optikraum untergebracht sind, der von einer Optikraumumhausung (20a) umhüllt wird,
wobei innerhalb des Optikraums eine definierte Gasatmosphäre aufrecht erhalten wird, **dadurch gekennzeichnet, dass** die relative Feuchte der definierten Gasatmosphäre unterhalb von 3% gehalten wird, und
es sich bei der Laserlichtquelle (21) um einen CO-Laser handelt.

2. Additives Herstellverfahren nach Anspruch 1, wobei in der Prozesskammer (3) eine definierte Prozesskammer-Gasatmosphäre aufrecht erhalten wird und die relative Feuchte der Prozesskammer-Gasatmosphäre unterhalb von 3% gehalten wird.

3. Additives Herstellverfahren nach einem der vorangehenden Ansprüche, bei dem die Laserstrahlung ab dem Ausgang der Laserlichtquelle (21) entlang ihres gesamten Strahlwegs außerhalb von optischen Komponenten bis zu einem Strahleintrittsfenster (25), durch das die Strahlung in die Prozesskammer (3) eintritt, innerhalb der definierten Gasatmosphäre geführt wird.

4. Additives Herstellverfahren nach einem der vorangehenden Ansprüche, bei dem die relative Feuchte der definierten Gasatmosphäre geregelt wird indem mindestens ein die relative Feuchte der definierten Gasatmosphäre charakterisierender Messwert, der von mindestens einem im Optikraum angeordneten Feuchtigkeitssensor (70) ausgegeben wird, für die Regelung der relativen Feuchte der definierten Gasatmosphäre verwendet wird.

5. Additives Herstellverfahren nach einem der vorangehenden Ansprüche, bei dem die definierte Gasatmosphäre im Optikraum durch Zuführen eines Gases mit einem Volumenstrom, der größer oder gleich 2 l/min ist und/oder kleiner oder gleich 15 l/min, bevorzugt 10 l/min, ist, aufrechterhalten wird.

6. Additives Herstellverfahren nach einem der vorangehenden Ansprüche, bei dem die definierte Gasatmosphäre im Optikraum durch Fluten des Optikraums mit einem Volumenstrom, der größer als 50 l/min, bevorzugt größer als 80 l/min, und/oder kleiner als 120 l/min, bevorzugt kleiner als 150 l/min, herbeigeführt wird.

7. Additives Herstellverfahren nach einem der vorangehenden Ansprüche, bei dem als Aufbaumaterial ein kunststoffbasiertes Pulver verwendet wird.

8. Additive Herstellvorrichtung zum Herstellen eines dreidimensionalen Objekts (2) durch selektives schichtweises Verfestigen von Aufbaumaterial (13) mittels Bestrahlens mit Laserstrahlung mit:
einer Prozesskammer (3), in der wiederholt eine Aufbaumaterialschicht auf eine bereits zuvor selektiv verfestigte Aufbaumaterialschicht aufgebracht werden kann und an Stellen mit der Laserstrahlung abgetastet werden kann, die dem Querschnitt des Objekts in dieser Schicht entsprechen,
einer Laserlichtquelle (21) zum Erzeugen der Laserstrahlung,
einer Anzahl von optischen Komponenten zum Richten der Laserstrahlung auf die Aufbaumaterialschicht, wobei die Anzahl der optischen Komponenten in einem Optikraum angeordnet ist, der von einer Optikraumumhausung (20a) umhüllt wird, die zur Aufrechterhaltung einer definierten Gasatmosphäre im Optikraum geeignet ist,
**dadurch gekennzeichnet, dass** eine Feuchtigkeitssteuerungseinrichtung die relative Feuchte der definierten Gasatmosphäre innerhalb der Optikraumumhausung (20a) im Betrieb der additiven Herstellvorrichtung unterhalb von 3% hält und
es sich bei der Laserlichtquelle (21) um einen CO-Laser handelt.

9. Additive Herstellvorrichtung nach Anspruch 8, bei der die Laserlichtquelle (21) außerhalb der Optikraumumhausung (20a) angeordnet ist und über eine Laserstrahleinhausung (20b) mit der Optikraumumhausung (20a), vorzugsweise mittels einer hermetischen Verbindung, verbunden ist, wobei die Laserstrahleinhausung (20b) zur Aufrechterhaltung einer definierten Gasatmosphäre geeignet ist und so ausgebildet ist, dass Laserstrahlung von der Laserlichtquelle durch die Laserstrahleinhausung (20b) in die Optikraumumhausung (20a) geleitet werden kann.

10. Additive Herstellvorrichtung nach einem der Ansprüche 8 bis 9, bei der im Optikraum mindestens ein Feuchtigkeitssensor (70) angeordnet ist.

11. Additive Herstellvorrichtung nach einem der Ansprüche 8 bis 10, die eine Flutungseinrichtung aufweist, welche bei Betätigung ein Einleiten von Gas in eine Optikraumumhausung (20a) mit einem Volumenstrom, der größer als 50 l/min, bevorzugt größer als 80 l/min und/oder kleiner als 120 l/min, bevorzugt kleiner als 150 l/min ermöglicht.

12. Additive Herstellvorrichtung nach einem der Ansprüche 8 bis 11, bei der die Optikraumumhausung (20a) mindestens eine Zugriffsöffnung (300, 400, 500) aufweist, insbesondere eine Wartungsöffnung (400, 500), durch die eine Justierung einer optischen Komponente unter Aufrechterhaltung der definierten Gasatmosphäre im Optikraum möglich ist, wenn der Druck in der Optikraumumhausung größer ist als der Umgebungsdruck.

13. Additive Herstellvorrichtung nach Anspruch 12, bei der eine der Anzahl von optischen Komponenten eine Laserleistungsmodifikationsvorrichtung (27) ist, bevorzugt ein akustooptischer oder elektrooptischer Modulator, die durch die Wartungsöffnung (500) manuell von außerhalb der Optikraumumhausung (20a) einstellbar ist.

14. Additive Herstellvorrichtung nach einem der Ansprüche 12 bis 13, bei der die Zugriffsöffnung (300, 400, 500) einen Maximaldurchmesser aufweist, der geringer als 12 mm ist, bevorzugt geringer als 10 mm ist und/oder einen Minimaldurchmesser, der größer als 5 mm ist, bevorzugt größer als 8 mm ist.

## Claims

1. An additive manufacturing method for manufacturing a three-dimensional object (2) in an additive manufacturing apparatus (1) by a layer-wise selective solidification of building material (13) by means of an irradiation with laser radiation, wherein:
in a process chamber (3) repeatedly a layer of building material is applied on a previously selectively solidified building material layer and is scanned with laser radiation at positions corresponding to the cross-section of the object in this layer,
the laser radiation is generated by means of a laser light source (21) and is directed onto the building material layer via a number of optical components, wherein an optics compartment that is encased by an optics compartment housing (20a) accommodates the optical components,
wherein a defined gas atmosphere is maintained inside of the optics compartment,
**characterized in that** the relative humidity of the defined gas atmosphere is kept below 3% and **in that** the laser light source (21) is a CO laser.

2. The additive manufacturing method of claim 1, wherein a defined process chamber gas atmosphere is maintained in the process chamber (3) and the relative humidity of the process chamber gas atmosphere is kept below 3%.

3. The additive manufacturing method of one of the preceding claims, wherein from the exit of the laser light source (21) to a beam entrance window (25) through which the radiation enters the process chamber (3), the laser radiation is led inside of the defined gas atmosphere along its entire beam path outside of optical components.

4. The additive manufacturing method of one of the preceding claims, wherein the relative humidity of the defined gas atmosphere is feedback-controlled using at least one measurement value characterizing the relative humidity of the defined gas atmosphere, which is output by at least one humidity sensor (70) arranged in the optics compartment, for feedback-controlling the relative humidity of the defined gas atmosphere.

5. The additive manufacturing method of one of the preceding claims, wherein the defined gas atmosphere in the optics compartment is maintained by supplying a gas with a volume flow rate that is larger than or equal to 2 l/min and/or smaller than or equal to 15 l/min, preferably 10 l/min.

6. The additive manufacturing method of one of the preceding claims, wherein the defined gas atmosphere in the optics compartment is established by flooding the optics compartment with a volume flow rate that is larger than 50 l/min, preferably larger than 80 l/min, and/or smaller than 120 l/min, preferably smaller than 150 l/min.

7. The additive manufacturing method of one of the preceding claims, wherein a plastic-based powder is used as building material.

8. An additive manufacturing apparatus for manufacturing a three-dimensional object (2) by a layer-wise selective solidification of building material (13) by means of an irradiation with laser radiation, comprising:
a process chamber (3), in which repeatedly a layer of building material can be applied on a previously selectively solidified building material layer and can be scanned with the laser radiation at positions corresponding to the cross-section of the object in this layer,
a laser light source (21) for generating the laser radiation,
a number of optical components for directing the laser radiation onto the building material layer, wherein the number of optical components is arranged in an optics compartment that is encased by an optics compartment housing (20a), which is configured to maintain a defined gas atmosphere in the optics compartment,
**characterized in that** a humidity control unit keeps the relative humidity of the defined gas atmosphere inside of the optics compartment housing (20a) below 3% during the operation of the additive manufacturing apparatus and
**in that** the laser light source (21) is a CO laser.

9. The additive manufacturing apparatus of claim 8, wherein the laser light source (21) is arranged outside of the optics compartment housing (20a) and is connected to the optics compartment housing (20a) via a laser beam housing (20b), preferably by means of a hermetical connection, wherein the laser beam housing (20b) is configured to maintain a defined gas atmosphere and is designed such that laser radiation can be directed from the laser light source through the laser beam housing (20b) into the optics compartment housing (20a).

10. The additive manufacturing apparatus of one of claims 8 to 9, wherein at least one humidity sensor (70) is arranged in the optics compartment.

11. The additive manufacturing apparatus of one of claims 8 to 10, comprising a flooding device, which when being activated enables a feeding of gas into an optics compartment housing (20a) with a volume flow rate that is larger than 50 l/min, preferably larger than 80 l/min, and/or smaller than 120 l/min, preferably smaller than 150 l/min.

12. The additive manufacturing apparatus of one of claims 8 to 11, wherein the optics compartment housing (20a) has at least one access opening (300, 400, 500), in particular a service opening (400, 500), through which an optical component can be adjusted while a defined gas atmosphere is maintained in the optics compartment when the pressure inside of the optics compartment housing is larger than the surrounding pressure.

13. The additive manufacturing apparatus of claim 12, wherein one of the number of optical components is a laser power modification device (27), preferably an acousto-optic or electro-optic modulator, which can be adjusted manually from outside of the optics compartment housing (20a) via the service opening (500).

14. The additive manufacturing apparatus of one of claims 12 to 13, wherein the access opening (300, 400, 500) has a maximum diameter that is smaller than 12 mm, preferably smaller than 10 mm, and/or a minimum diameter that is larger than 5 mm, preferably larger than 8 mm.

## Revendications

1. Procédé de fabrication additive pour fabriquer un objet tridimensionnel (2) dans un dispositif de fabrication additive (1) par solidification sélective couche par couche d'un matériau de construction (13) par irradiation avec un rayonnement laser, dans lequel :
dans une chambre de traitement (3), une couche de matériau de construction est appliquée de manière répétée sur une couche de matériau de construction déjà solidifiée de manière sélective et est balayée avec le rayonnement laser à des emplacements correspondant à la section transversale de l'objet dans cette couche,
le rayonnement laser est généré avec une source de lumière laser (21) et est dirigé sur la couche de matériau de construction via un certain nombre de composants optiques, les composants optiques étant logés dans un espace optique enveloppé par une enveloppe d'espace optique (20a),
dans lequel une atmosphère gazeuse définie est maintenue à l'intérieur de l'espace optique,
**caractérisé en ce que** l'humidité relative de l'atmosphère gazeuse définie est maintenue en dessous de 3 %, et
la source de lumière laser (21) est un laser à CO.

2. Procédé de fabrication additive selon la revendication 1, dans lequel une atmosphère gazeuse de chambre de traitement définie est maintenue dans la chambre de traitement (3) et l'humidité relative de l'atmosphère gazeuse de chambre de traitement est maintenue en dessous de 3 %.

3. Procédé de fabrication additive selon l'une quelconque des revendications précédentes, dans lequel le rayonnement laser est guidé à partir de la sortie de la source de lumière laser (21) le long de toute sa trajectoire de faisceau à l'extérieur des composants optiques jusqu'à une fenêtre d'entrée de faisceau (25) à travers laquelle le rayonnement entre dans la chambre de traitement (3) à l'intérieur de l'atmosphère gazeuse définie.

4. Procédé de fabrication additive selon l'une quelconque des revendications précédentes, dans lequel l'humidité relative de l'atmosphère gazeuse définie est régulée en utilisant au moins une valeur de mesure caractérisant l'humidité relative de l'atmosphère gazeuse définie, qui est délivrée par au moins un capteur d'humidité (70) disposé dans l'espace optique, pour la régulation de l'humidité relative de l'atmosphère gazeuse définie.

5. Procédé de fabrication additive selon l'une quelconque des revendications précédentes, dans lequel l'atmosphère gazeuse définie est maintenue dans l'espace optique par introduction d'un gaz avec un débit volumique qui est supérieur ou égal à 2 l/min et/ou inférieur ou égal à 15 l/min, de préférence 10 l/min.

6. Procédé de fabrication additive selon l'une quelconque des revendications précédentes, dans lequel l'atmosphère gazeuse définie est provoquée dans l'espace optique par remplissage de l'espace optique avec un débit volumique qui est supérieur à 50 I/min, de préférence supérieur à 80 l/min, et/ou inférieur à 120 I/min, de préférence inférieur à 150 l/min.

7. Procédé de fabrication additive selon l'une quelconque des revendications précédentes, dans lequel une poudre à base de plastique est utilisée comme matériau de construction.

8. Dispositif de fabrication additive pour fabriquer un objet tridimensionnel (2) par solidification sélective couche par couche d'un matériau de construction (13) par irradiation avec un rayonnement laser, comprenant :
une chambre de traitement (3) dans laquelle une couche de matériau de construction peut être appliquée de manière répétée sur une couche de matériau de construction déjà solidifiée de manière sélective et peut être balayée avec le rayonnement laser à des emplacements correspondant à la section transversale de l'objet dans cette couche,
une source de lumière laser (21) pour générer le rayonnement laser,
un nombre de composants optiques pour diriger le rayonnement laser sur la couche de matériau de construction, le nombre de composants optiques étant disposés dans un espace optique enveloppé par une enveloppe d'espace optique (20a) appropriée pour maintenir une atmosphère gazeuse définie dans l'espace optique,
**caractérisé en ce qu'**un moyen de régulation d'humidité maintient l'humidité relative de l'atmosphère gazeuse définie à l'intérieur de l'enveloppe d'espace optique (20a) en dessous de 3 % pendant le fonctionnement du dispositif de fabrication additive, et
la source de lumière laser (21) est un laser à CO.

9. Dispositif de fabrication additive selon la revendication 8, dans lequel la source de lumière laser (21) est disposée à l'extérieur de l'enveloppe d'espace optique (20a) et est reliée à l'enveloppe d'espace optique (20a) par l'intermédiaire d'une enveloppe de faisceau laser (20b), de préférence au moyen d'une liaison hermétique, l'enveloppe de faisceau laser (20b) étant appropriée pour maintenir une atmosphère gazeuse définie et étant conçue de telle sorte que le rayonnement laser peut être guidé de la source de lumière laser à travers l'enveloppe de faisceau laser (20b) dans l'enveloppe d'espace optique (20a).

10. Dispositif de fabrication additive selon l'une quelconque des revendications 8 à 9, dans lequel au moins un capteur d'humidité (70) est disposé dans l'espace optique.

11. Dispositif de fabrication additive selon l'une quelconque des revendications 8 à 10, qui présente un moyen de remplissage qui, lors de l'actionnement, permet une introduction de gaz dans une enveloppe d'espace optique (20a) ayant un débit volumique qui est supérieur à 50 I/min, de préférence supérieur à 80 l/min et/ou inférieur à 120 I/min, de préférence inférieur à 150 l/min.

12. Dispositif de fabrication additive selon l'une quelconque des revendications 8 à 11, dans lequel l'enveloppe d'espace optique (20a) présente au moins une ouverture d'accès (300, 400, 500), en particulier une ouverture de maintenance (400, 500), à travers laquelle un réglage d'un composant optique est possible tout en maintenant l'atmosphère gazeuse définie dans l'espace optique lorsque la pression dans l'enveloppe d'espace optique est supérieure à la pression ambiante.

13. Dispositif de fabrication additive selon la revendication 12, dans lequel l'un du nombre de composants optiques est un dispositif de modification de puissance laser (27), de préférence un modulateur acousto-optique ou électro-optique, qui peut être réglé manuellement depuis l'extérieur de l'enveloppe d'espace optique (20a) à travers l'ouverture de maintenance (500).

14. Dispositif de fabrication additive selon l'une quelconque des revendications 12 à 13, dans lequel l'ouverture d'accès (300, 400, 500) présente un diamètre maximal qui est inférieur à 12 mm, de préférence inférieur à 10 mm et/ou un diamètre minimal qui est supérieur à 5 mm, de préférence supérieur à 8 mm.
